(19) Europäisches Patentamt
European Patent Office
Office européen des brevets

(11) **EP 4 679 385 A1**

(12) **EUROPEAN PATENT APPLICATION**
published in accordance with Art. 153(4) EPC

(43) Date of publication:
**14.01.2026 Bulletin 2026/03**

(21) Application number: 23926085.4

(22) Date of filing: **15.12.2023**

(51) International Patent Classification (IPC):
*G06V 20/56* (2022.01)   *G01S 7/48* (2006.01)
*G01S 13/66* (2006.01)   *G06V 10/776* (2022.01)

(52) Cooperative Patent Classification (CPC):
**G01S 7/48; G01S 13/66; G06V 10/776;
G06V 20/56;** Y02A 90/10

(86) International application number:
**PCT/CN2023/138983**

(87) International publication number:
**WO 2024/183391 (12.09.2024 Gazette 2024/37)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**KH MA MD TN**

(30) Priority: **03.03.2023 CN 202310194602**

(71) Applicant: **Anhui NIO Autonomous Driving
Technology Co., Ltd.
Hefei, Anhui 230601 (CN)**

(72) Inventors:
• **HE, Xindong
Shanghai 201804 (CN)**
• **XIONG, Ziyu
Shanghai 201804 (CN)**
• **PENG, Yi
Shanghai 201804 (CN)**
• **REN, Guanghui
Shanghai 201804 (CN)**
• **YAO, Maoqing
Shanghai 201804 (CN)**

(74) Representative: **Vossius & Partner
Patentanwälte Rechtsanwälte mbB
Siebertstrasse 3
81675 München (DE)**

(54) **POINT CLOUD OBJECT DETECTION METHOD, COMPUTER DEVICE, STORAGE MEDIUM, AND VEHICLE**

(57)    The invention relates to the technical field of autonomous driving, and specifically provides a point cloud object detection method, a computer device, a storage medium, and a vehicle, to solve the problem of improving the accuracy of point cloud object detection. The method includes: obtaining a three-dimensional(3D) point cloud frame collected by a radar, performing object detection on the 3D point cloud frame to obtain a 3D object bounding box represented by 3D coordinates of bounding box corner points, and obtaining an object detection result based on the 3D object bounding box. Through the method, even if an object is covered, coordinates of uncovered end points of the object can be accurately obtained based on 3D coordinates of bounding box corner points in a 3D object bounding box, so that the accuracy of object detection can be effectively improved, and effective tracking corner points are provided for object tracking, thereby ensuring the accuracy and reliability of object tracking.

```
                    ┌─────────┐
                    │  Start  │
                    └─────────┘
                         │
                         ▼
    ┌──────────────────────────────────────────┐
    │ Obtain a 3D point cloud frame collected   │──── S101
    │ by a radar                                │
    └──────────────────────────────────────────┘
                         │
                         ▼
    ┌──────────────────────────────────────────┐
    │ Perform object detection on the 3D point  │──── S102
    │ cloud frame to obtain a 3D object bounding │
    │ box represented by 3D coordinates of       │
    │ bounding box corner points                 │
    └──────────────────────────────────────────┘
                         │
                         ▼
    ┌──────────────────────────────────────────┐
    │ Obtain an object detection result based   │──── S103
    │ on the 3D object bounding box             │
    └──────────────────────────────────────────┘
                         │
                         ▼
                    ┌─────────┐
                    │   End   │
                    └─────────┘
```

*FIG. 1*

EP 4 679 385 A1

## Description

The present application claims the priority to Chinese Patent Application No. 202310194602.4, filed on March 3, 2023, and entitled "POINT CLOUD OBJECT DETECTION METHOD, COMPUTER DEVICE, STORAGE MEDIUM, AND VEHICLE", which is incorporated herein by reference in its entirety.

## TECHNICAL FIELD

The invention relates to the field of autonomous driving technologies, and in particular, to a point cloud object detection method, a computer device, a storage medium, and a vehicle.

## BACKGROUND ART

When autonomous driving control is performed on a vehicle, a radar is usually used to acquire a 3D point cloud of the surrounding environment, and object detection is then performed on the 3D point cloud to obtain a 3D bounding box of the object, and then the type, position, and size of the object are further detected based on the 3D bounding box of the object. At present, the conventional point cloud object detection method mainly uses a CSA mode to obtain the 3D bounding box of the object, that is, 3D center point coordinates (Center), a 3D size (Size), and an object angle (Angle) are used to represent the 3D bounding box. However, in practical applications, the object may be covered, which leads to missing 3D point clouds collected from the object. In this case, it is difficult to obtain accurate 3D center point coordinates, which may further affect the accuracy of the 3D bounding box and ultimately reduce the accuracy of the object detection.

Accordingly, there is a need for a new technical solution in the field to solve the problem described above.

## SUMMARY

To overcome the above disadvantages, the invention is proposed to provide a point cloud object detection method, a computer device, and a computer-readable storage medium that solve or at least partially solve the technical problem of how to improve the accuracy of point cloud object detection.

According to a first aspect, the invention provides a point cloud object detection method. The method includes: obtaining a 3D point cloud frame collected by a radar; performing object detection on the 3D point cloud frame to obtain a 3D object bounding box represented by 3D coordinates of bounding box corner points; and obtaining an object detection result based on the 3D object bounding box.

In one technical solution of the point cloud object detection method described above, the step of "obtaining a 3D object bounding box represented by 3D coordinates of bounding box corner points" includes: detecting a minimum value and a maximum value, on a Z axis, of an object in the 3D point cloud frame, and separately obtaining a first XY plane and a second XY plane intersecting with the Z axis at the minimum value and the maximum value; detecting 2D coordinates of first bounding box corner points of a 2D bounding box corresponding to the object on the first XY plane, and obtaining 3D coordinates of the first bounding box corner points based on the 2D coordinates and the minimum value; detecting 2D coordinates of second bounding box corner points of a 2D bounding box corresponding to the object on the second XY plane, and obtaining 3D coordinates of the second bounding box corner points based on the 2D coordinates and the maximum value; and obtaining the 3D object bounding box based on the 3D coordinates of the first bounding box corner points and the second bounding box corner points.

In one technical solution of the point cloud object detection method described above, the method further includes: using a preset point cloud object detection model to separately detect the 2D coordinates of the first bounding box corner points and the second bounding box corner points, where the preset point cloud object detection model is obtained through training by: using a point cloud object detection model to detect a specific value, on the Z axis, of the object in a sample of the 3D point cloud frame, and obtaining a third XY plane intersecting with the Z axis at the specific value, the specific value being a minimum value or a maximum value of the object on the Z axis; obtaining predicted 2D coordinate values and a predicted arrangement sequence of third bounding box corner points of a 2D bounding box corresponding to the object on the third XY plane, and obtaining real two-dimensional coordinate values and a real arrangement sequence of the third bounding box corner points based on the sample; forming each coordinate group from a predicted 2D coordinate value and a real 2D coordinate value corresponding to a same arrangement rank based on the predicted arrangement sequence and the real arrangement sequence of the third bounding box corner points; using a regression loss function to obtain a loss value between a predicted 2D coordinate value and a real 2D coordinate value in each coordinate group, and obtaining a model loss value based on the loss value; and updating model parameters of the point cloud object detection model based on the model loss value.

In one technical solution of the point cloud object detection method described above, before the step of "obtaining a model loss value based on the loss value", the method further includes: analyzing visibility of each of the third bounding box corner points on the third XY plane; adjusting a loss weight of a loss value corresponding to the predicted 2D coordinate value of the third bounding box corner points based on an analysis result of the visibility; and obtaining a model loss value based on the loss value and an adjusted loss weight.

In one technical solution of the point cloud object detection method described above, the step of "adjusting a loss weight of a loss value corresponding to the predicted 2D coordinate value of the third bounding box corner points based on an analysis result of the visibility" includes: determining whether the third bounding box corner points are visible based on the analysis result of the visibility; and if the third bounding box corner points are visible, increasing the corresponding loss weight; or if the third bounding box corner points are invisible, decreasing the corresponding loss weight.

In one technical solution of the point cloud object detection method described above, the step of "analyzing visibility of each of the third bounding box corner points on the third XY plane" includes: separately analyzing visibility of the third bounding box corner point on an X-axis and a Y-axis of the third XY plane; and the step of "adjusting a loss weight of a loss value corresponding to the predicted 2D coordinate value of the third bounding box corner points based on an analysis result of the visibility" includes: adjusting a loss weight of a loss value corresponding to an X-axis coordinate in the predicted 2D coordinate value based on an analysis result of the visibility of the third bounding box corner points on the X-axis; and adjusting a loss weight of a loss value corresponding to a Y-axis coordinate in the predicted 2D coordinate value based on an analysis result of the visibility of the third bounding box corner points on the Y axis.

In one technical solution of the point cloud object detection method described above, before the step of "forming each coordinate group from a predicted 2D coordinate value and a real 2D coordinate value corresponding to a same arrangement rank based on the predicted arrangement sequence and the real arrangement sequence of the third bounding box corner points", the method further includes: performing object orientation prediction on the sample to obtain a predicted orientation of the object, where a third bounding box corner point in the first arrangement rank in the predicted arrangement sequence is located at the upper left of the predicted orientation, and the third bounding box corner points are sequentially arranged in a preset sequence; determining whether the predicted orientation of the object is opposite to a preset real orientation, where a third bounding box corner point in the first arrangement rank in the real arrangement sequence is located at the upper left of the real orientation, and the third bounding box corner points are also sequentially arranged in the preset sequence; and if the predicted orientation of the object is opposite to the preset real orientation, adjusting the predicted arrangement sequence of the third bounding box corner points so that the predicted orientation of the object is the same as the real orientation and the third bounding box corner point in the first arrangement rank in the predicted arrangement sequence is always located at the upper left of the predicted orientation; or if the predicted orientation of the object is not opposite to the preset real orientation, skipping adjusting the predicted arrangement sequence of the third bounding box corner points.

In one technical solution of the point cloud object detection method described above, the step of "adjusting the predicted arrangement sequence of the third bounding box corner points" includes: calculating an included angle between the predicted orientation and a side formed by connecting every two adjacent third bounding box corner points; and taking a side corresponding to the smallest included angle as a long side of a 2D bounding box and adjusting an arrangement rank of each of the third bounding box corner points based on the preset sequence until the predicted orientation of the object is the same as the preset realorientation.

In one technical solution of the point cloud object detection method described above, the step of "obtaining a predicted arrangement sequence of third bounding box corner points" includes: obtaining a predicted arrangement sequence of third bounding box corner points when the object is in each different orientation, where each group of predicted arrangement sequence is in a one-to-one correspondence with each orientation; the step of "forming each coordinate group from a predicted 2D coordinate value and a real 2D coordinate value corresponding to a same arrangement rank based on the predicted arrangement sequence and the real arrangement sequence of the third bounding box corner points" includes: for each group of predicted arrangement sequence, forming each coordinate group from a predicted 2D coordinate value and a real 2D coordinate value corresponding to a same arrangement rank based on a current group of predicted arrangement sequence and the real arrangement sequence; the step of "obtaining a model loss value" includes: for each group of predicted arrangement sequence, using a regression loss function to obtain a loss value between a predicted 2D coordinate value and a real 2D coordinate value in each coordinate group corresponding to a current group of predicted arrangement sequence, and obtaining the model loss value based on the loss value; and the step of "updating model parameters of the point cloud object detection model based on the model loss value" includes: selecting the smallest model loss value from the model loss value corresponding to each group of predicted arrangement sequence, and updating model parameters based on the smallest model loss value.

According to a second aspect, a computer device is provided. The computer device includes a processor and a storage apparatus adapted to store multiple program codes, and the program codes are adapted to be loaded and run by the processor to perform the method in any one of the above technical solutions of the point cloud object detection method.

According to a third aspect, a non-transitory computer-readable storage medium is provided. Multiple program codes are stored in the computer-readable storage medium, and the program codes are adapted to be loaded and run by a processor to perform the method in any one of the above technical solutions of the point cloud object detection method.

According to a fourth aspect, a vehicle is provided, including the computer device in the technical solution of the above computer device.

The one or more technical solutions of the invention described above have at least one or more of the following beneficial effects:

In the technical solution of implementing the point cloud object detection method provided by the invention, the 3D point cloud frame collected by the radar may be obtained, object detection may be performed on the 3D point cloud frame to obtain the 3D object bounding box represented by the 3D coordinates of the bounding box corner points, and the object detection result is obtained based on the 3D object bounding box. Through the method, even if the 3D point cloud collected by the radar for the object is missing due to the object being covered, coordinates of uncovered end points of the object can be accurately obtained based on the 3D coordinates of the bounding box corner points in the 3D object bounding box, so that the accuracy of object detection can be effectively improved, and effective tracking corner points (or tracking end points) are provided for object tracking, thereby ensuring the accuracy and reliability of object tracking.

## BRIEF DESCRIPTION OF THE DRAWINGS

The disclosed content of the invention will become more readily understood with reference to the accompanying drawings. Those skilled in the art readily understand that: These accompanying drawings are merely for illustrative purposes and are not intended to limit the protection scope of the invention. In the drawings:

FIG. 1 is a schematic flowchart of main steps of a point cloud object detection method according to an embodiment of the invention;
FIG. 2 is a schematic flowchart of main steps of a method for obtaining a 3D object bounding box according to an embodiment of the invention;
FIG. 3 is a schematic flowchart of main steps of a method for training a point cloud object detection model according to an embodiment of the invention;
FIG. 4 is a schematic diagram of bounding box corner points according to an embodiment of the invention;
FIG. 5 is a schematic diagram of obtaining a 3D bounding box using a CSA mode in the prior art;
FIG. 6 is a schematic diagram of reversing a predicted orientation of an object according to an embodiment of the invention;
FIG. 7 is a schematic diagram of adjusting different object orientations according to an embodiment of the invention; and
FIG. 8 is a schematic diagram of a main structure of a computer device according to an embodiment of the invention.

## DETAILED DESCRIPTION OF EMBODIMENTS

Some implementations of the invention are described below with reference to the accompanying drawings. Those skilled in the art should understand that these implementations are only used to explain the technical principles of the invention, and are not intended to limit the protection scope of the invention.

In the description of the invention, a "processor" may include hardware, software, or a combination thereof. The processor may be a central processing unit, a microprocessor, a graphics processing unit, a digital signal processor, or any other suitable processor. The processor has a data and/or signal processing function. The processor may be implemented in software, hardware, or a combination thereof. A computer-readable storage medium includes any suitable medium that can store program code, such as a magnetic disk, a hard disk, an optical disc, a flash memory, a read-only memory, or a random access memory.

An embodiment of a point cloud object detection method provided in the invention is described below.

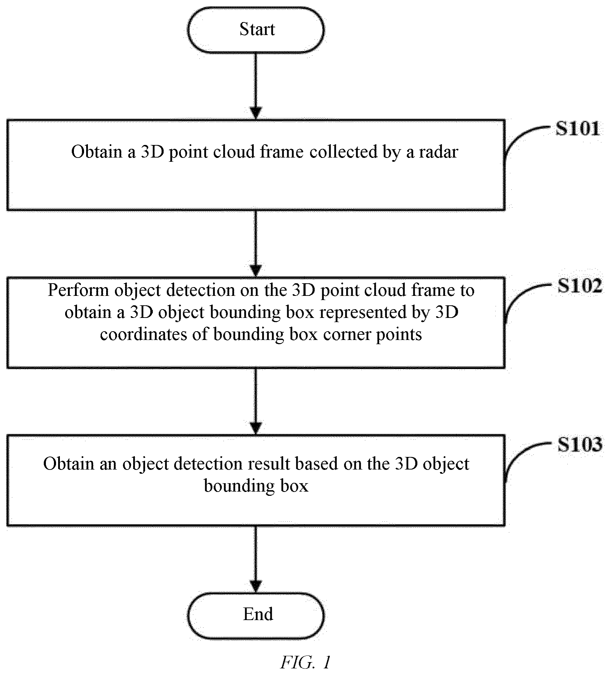

Referring to FIG. 1, FIG. 1 is a schematic flowchart of main steps of a point cloud object detection method according to an embodiment of the invention. As shown in FIG. 1, the point cloud object detection method in this embodiment of the invention mainly includes step S101 to step S103 below.

Step S101: Obtain a 3D point cloud frame collected by a radar.

The 3D point cloud frame may be a point cloud frame collected from the surrounding environment by the radar (such as a lidar) on a vehicle. A point cloud on the point cloud frame is determined based on an echo signal reflected by environment points in the environment after receiving an electromagnetic wave emitted by the radar. Each point cloud is in a one-to-one correspondence with each environment point. The point cloud contains coordinates of the environment point in a 3D coordinate system, which may be a point cloud coordinate system. It should be noted that operations related to the vehicle, such as acquiring the point cloud frame by the radar mentioned in the invention, are all performed after sufficient authorization by a user or all parties. That is, the vehicle in the invention is an authorized vehicle. In some implementations, a vehicle infotainment system or a backend server may detect whether authorization information is received. If the authorization information is received, it indicates that the current vehicle is an authorized vehicle. Otherwise, the current vehicle is an unauthorized vehicle. The authorization information may be sent through a terminal device including but not limited to a mobile phone, a tablet computer, a smart watch, and the like.

Step S102: Perform object detection on the 3D point cloud frame to obtain a 3D object bounding box represented by 3D coordinates of bounding box corner points.

The 3D object bounding box of an object is a bounding box containing all or most of 3D point clouds of the object, and a 3D object bounding box represents an object in a current environment. In some implementations, the object includes at least a motor vehicle, a traffic sign on a road, and the like.

Since the 3D object bounding box is a cuboid, it has eight bounding box corner points. In this embodiment of the invention, 3D coordinates $(x, y, z)$ of each bounding box corner point may be obtained by performing object detection on a 3D point cloud frame, and then the 3D coordinates $(x, y, z)$ of the eight bounding box corner points may be used to represent the 3D object bounding box. For example, the 3D object bounding box may be expressed as [x1, y1, z1, x2, y2, z2, x3, y3, z3, x4, y4, z4, x5, y5, z5, x6, y6, z6, x7, y7, z7, x8, y8, z8], where "x1, y1, z1" represents coordinates of the first bounding box corner point on an X axis, a Y axis, and a Z axis, and other parameters have similar meanings, and will not be described in detail.

Step S103: Obtain an object detection result based on the 3D object bounding box.

Based on the 3D coordinates of each bounding box corner point of the 3D object bounding box, information such as a size, a position of the 3D object bounding box and an angle of the 3D object bounding box relative to a specified direction may be obtained. The information is different types of object detection results, that is, the information such as the size, position, and angle of the 3D object bounding box is information such as a size, a position, and an angle of the object represented by the 3D object bounding box. Those skilled in the art can flexibly use the 3D coordinates of the bounding box corner points to obtain different types of object detection results according to needs, but the embodiments of the invention do not impose specific limitations on this, as long as desired types of object detection results can be obtained by using the 3D coordinates of the bounding box corner points.

For example, assuming that the object is a motor vehicle, a size and position of the motor vehicle may be obtained based on a 3D object bounding box of the motor vehicle.

Based on the method described in the foregoing steps S101 to S103, even if the 3D point cloud collected by the radar for the object is missing due to the object being covered, coordinates of uncovered end points of the object can be accurately obtained based on the 3D coordinates of the bounding box corner points in the 3D object bounding box, so that the accuracy of object detection can be effectively improved, and effective tracking corner points are provided for object tracking, thereby ensuring the accuracy and reliability of object tracking.

The foregoing step S102 is further described below.

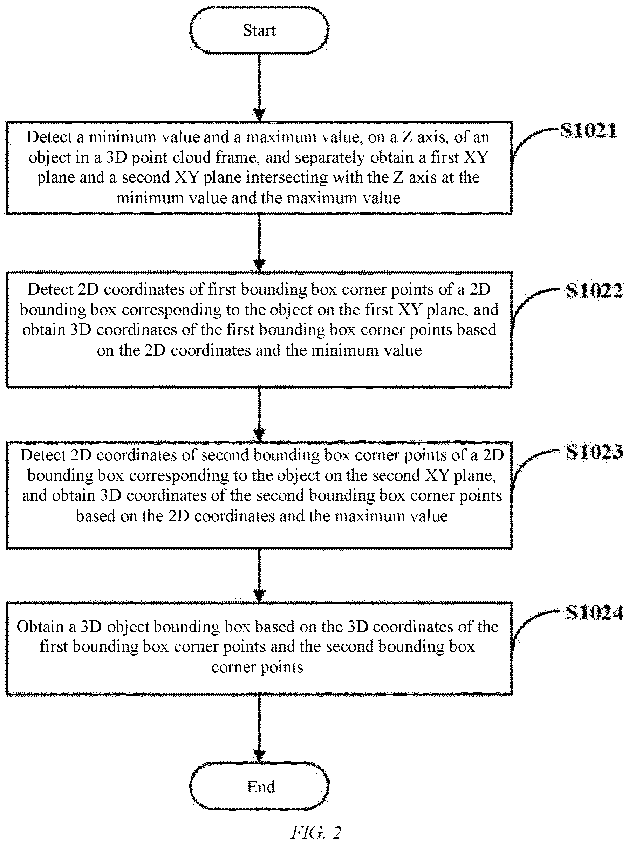

Referring to FIG. 2, in order to conveniently and accurately obtain the 3D coordinates of each bounding box corner point, the 3D coordinates of each bounding box corner point in the 3D object bounding box may be obtained by the following steps S1021 to S1024.

Step S1021: Detect a minimum value and a maximum value, on a Z axis, of an object in the 3D point cloud frame, and separately obtain a first XY plane and a second XY plane intersecting with the Z axis at the minimum value and the maximum value.

In the embodiments of the invention, the minimum value and the maximum value of the object on the Z-axis may be detected by a conventional position detection method in the technical field of 3D point clouds, and are not specifically limited in the embodiments of the invention. For example, in some implementations, after all the point clouds corresponding to the object are determined, the minimum value and the maximum value on the Z axis among the 3D coordinates may be selected based on 3D coordinates of each point cloud, and the minimum value and the maximum value of the point cloud on the Z axis may be used as the minimum value and the maximum value of the object on the Z axis. In addition, in some implementations, a pre-trained detection model capable of detecting the minimum value and the maximum value of the object on the Z axis may be used to detect the 3D point cloud frame to obtain the minimum value and the maximum value of the object on the Z axis. For example, a sample of a 3D point cloud frame labeled with the minimum value and the maximum value of the object on the Z axis may be used, and a detection model may be trained by using a regression loss function so that it is capable of detecting the minimum value and the maximum value of the object on the Z axis, and then the trained detection model may be used to detect the 3D point cloud frame.

The XY plane is a 2D plane parallel to an X axis and a Y axis in a 3D coordinate system at the same time, the first XY plane is perpendicular to the Z axis and intersects with the Z axis at the minimum value of the object on the Z axis, and the second XY plane is perpendicular to the Z axis and intersects with the Z axis at the maximum value of the object on the Z axis.

Step S1022: Detect 2D coordinates of first bounding box corner points of a 2D bounding box corresponding to the object on the first XY plane, and obtain 3D coordinates of the first bounding box corner points based on the 2D coordinates and the minimum value.

Since the first XY plane intersects with the object at the minimum value on the Z axis, the first XY plane may be understood as a 2D cross section of the bottom of the object, and the 2D bounding box corresponding to the object on the first XY plane may be understood as a 2D bounding box formed by four bounding box corner points of the bottom of the object, or may be understood as a projection of the 3D object bounding box on the first XY plane.

The 2D coordinates of the first bounding box corner points are coordinates of the first bounding box corner points on the X axis and the Y axis, and the 3D coordinates of the first bounding box corner points may be obtained by using the minimum value of the object on the Z axis as coordinates of the first bounding box corner points on the Z axis after the 2D coordinates are obtained.

Step S1023: Detect 2D coordinates of second bounding box corner points of a 2D bounding box corresponding to the object on the second XY plane, and obtain 3D coordinates of the second bounding box corner points based on the 2D coordinates and the maximum value.

Since the second XY plane intersects with the object at the maximum value on the Z axis, the second XY plane may be understood as a 2D cross section of the top of the object, and the 2D bounding box corresponding to the object on the second XY plane may be understood as a 2D bounding box formed by four bounding box corner points of the top of the object, or may be understood as a projection of the 3D object bounding box on the second XY plane.

The 2D coordinates of the second bounding box corner points are coordinates of the second bounding box corner points on the X axis and the Y axis, and the 3D coordinates of the second bounding box corner points may be obtained by using the maximum value of the object on the Z axis as coordinates of the second bounding box corner points on the Z axis after the 2D coordinates are obtained.

Step S1024: Obtain the 3D object bounding box based on the 3D coordinates of the first bounding box corner points and the second bounding box corner points.

After obtaining the 3D coordinates of the four first bounding box corner points and the 3D coordinates of the four second bounding box corner points, the 3D object bounding box may be represented by these 3D coordinates.

Based on the method described in the foregoing steps S1021 to S1024, the 3D object bounding box can be split into two 2D bounding boxes, and the bounding box corner point coordinates of the 3D object bounding box can be obtained by obtaining the bounding box corner point coordinates of the 2D bounding boxes, so that convenience and accuracy of obtaining the bounding box corner point coordinates of the 3D object bounding box can be significantly improved.

Further, in some implementations, in the foregoing steps S1022 and S1023, the 2D coordinates of the first bounding box corner points and the second bounding box corner points may be detected by using a preset point cloud object detection model, which is a pre-trained model capable of detecting the 2D coordinates. It is only required to call the point cloud object detection model when steps S1022 and S1023 are performed, and there is no need to first train the point cloud object detection model every time the 2D coordinates are detected and then use the trained point cloud object detection model to detect the 2D coordinates.

A training method of the point cloud object detection model is described below.

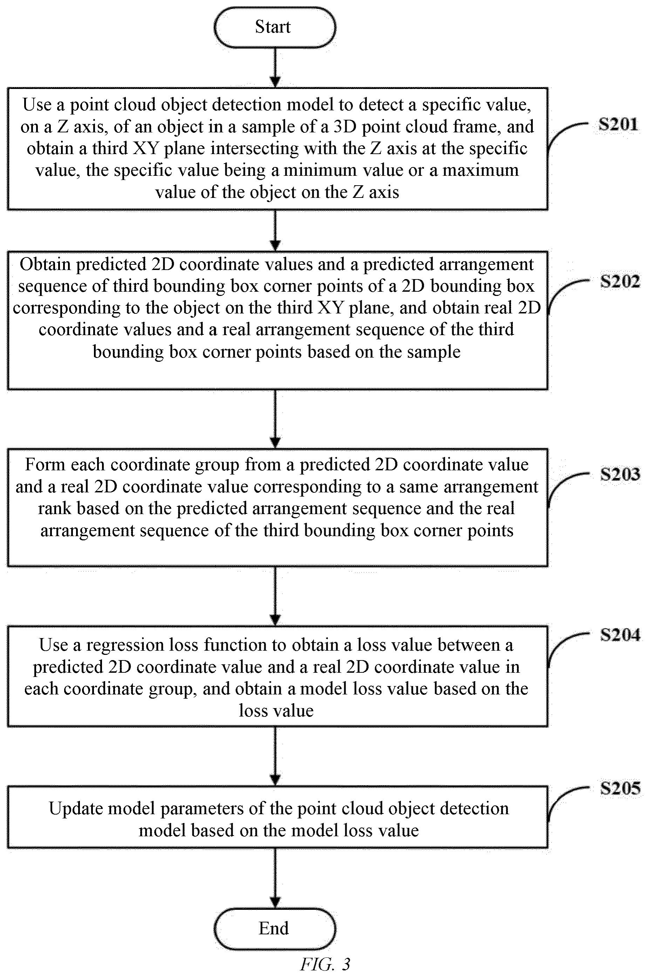

Referring to FIG. 3, in the embodiments of the invention, the point cloud object detection model can be obtained through training by using a regression loss function and the following steps S201 to S205.

Step S201: Use a point cloud object detection model to detect a specific value, on the Z axis, of the object in a sample of the 3D point cloud frame, and obtain a third XY plane intersecting with the Z axis at the specific value, the specific value being a minimum value or a maximum value of the object on the Z axis.

Step S202: Obtain predicted 2D coordinate values and a predicted arrangement sequence of third bounding box corner points of a 2D bounding box corresponding to the object on the third XY plane, and obtain real 2D coordinate values and a real arrangement sequence of the third bounding box corner points based on the sample.

When the specific value is the minimum value of the object on the Z axis, the third XY plane has the same meaning as the first XY plane in the embodiment described above. When the specific value is the maximum value of the object on the Z axis, the third XY plane has the same meaning as the second XY plane in the embodiment described above.

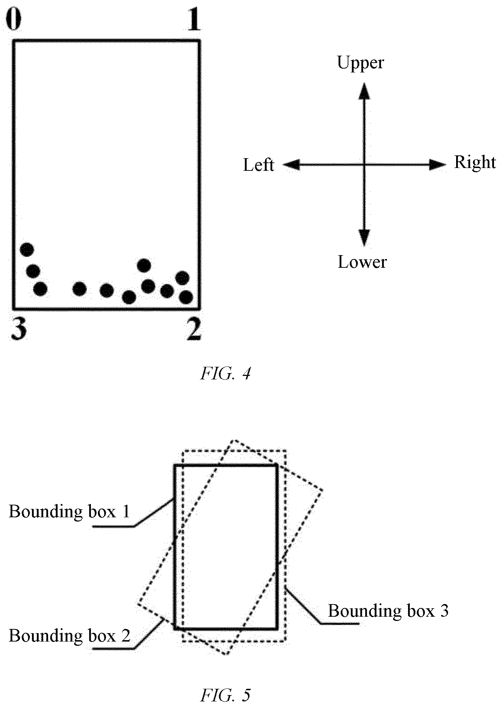

One 2D bounding box includes four bounding box corner points, and positions of the four bounding box corner points are unchanged, but the four bounding box corner points can be arranged according to a preset arrangement rule. Those skilled in the art can flexibly set specific content of the arrangement rules according to needs, as long as it is ensured that both the predicted arrangement sequence and the real arrangement sequence are obtained based on the same arrangement rule. In some preferred implementations, the arrangement rule may be set based on an object orientation. Specifically, a third bounding box corner point located at the upper left of the object orientation may be used as a corner point in the first arrangement rank, and then the other third bounding box corner points may be sequentially arranged in a preset sequence. As shown in FIG. 4, a rectangular box in FIG. 4 represents a 2D bounding box, black dots in the rectangular box represents a point cloud, and the object represented by the 2D bounding box has an upward orientation. First, the third bounding box corner point located at the upper left of the object orientation is used as a corner point in the first arrangement rank and is numbered 0, and then the third bounding box corner points located at the upper right, the lower right, and the lower left of the object orientation are sequentially arranged in a clockwise direction and are numbered 1, 2, and 3 respectively.

The predicted 2D coordinate values and the predicted arrangement sequence may be obtained by prediction using the point cloud object detection model, and the real 2D coordinate values and the real arrangement sequence of the third bounding box corner points are labelled in advance in the sample of the 3D point cloud frame, and the above information may be obtained from labeling information of the sample. The training of the point cloud object detection model not only includes training of the ability of the model to predict the predicted 2D coordinate values, but also includes training of the ability of the model to obtain the predicted arrangement sequence.

Step S203: Form each coordinate group from a predicted 2D coordinate value and a real 2D coordinate value corresponding to a same arrangement rank based on the predicted arrangement sequence and the real arrangement sequence of the third bounding box corner points.

Still referring to FIG. 4, it is assumed that the third bounding box corner points located at the upper left, upper right, lower right, and lower left in FIG. 4 are A, B, C, and D, respectively, the predicted arrangement sequence is BCDA, and the predicted 2D coordinate values of BCDA are (x12, y12), (x13, y13), (x14, y14), and (x11, y11), respectively, and the real arrangement sequence is ABCD, and the real 2D coordinate values of ABCD are (x21, y21), (x22, y22), (x23, y23), and (x24, y24), respectively. Then, x12, y12, x13, y13, x14, y14, x11, and y11 are in a one-to-one correspondence with x21, y21, x22, y22, x23, y23, x24, and y24, respectively, and eight coordinate groups can be formed.

Step S204: Use a regression loss function to obtain a loss value between a predicted 2D coordinate value and a real 2D coordinate value in each coordinate group, and obtain a model loss value based on the loss value.

In the embodiments of the invention, a conventional regression loss function in the technical field of model training may be used to obtain the loss value and the model loss value described above, but the embodiments of the invention do not impose specific limitations on this. For example, in some implementations, a smooth loss function may be used, and the model loss value obtained in this case may be shown in the following formula (1).

$$L = \sum_{i \in \{x1, y1, x2, y2, x3, y3, x4, y4\}} w_i * smooth(t_i - v_i) \qquad (1)$$

In formula (1), parameters are respectively defined as follows:

$t_i$ represents an $i^{th}$ predicted 2D coordinate value, $v_i$ represents a real 2D coordinate value corresponding to the $i^{th}$ predicted 2D coordinate value $t_i$, $smooth(t_i - v_i)$ represents a loss value corresponding to the $i^{th}$ predicted 2D coordinate value $t_i$ that is obtained by the smooth loss function, $w_i$ represents a loss weight of the loss value, and L represents a model loss value obtained based on the loss value corresponding to each predicted 2D coordinate value.

In the embodiments of the invention, since a degree of contribution of a predicted 2D coordinate value of each bounding box corner point to the accuracy of a bounding box is the same, a loss weight $w_i$ corresponding to the predicted 2D coordinate value of each bounding box corner point may be set to a same value, for example, may all be set to 1.

Step S205: Update model parameters of the point cloud object detection model based on the model loss value. Specifically, a model parameter gradient of the point cloud object detection model may be calculated based on the model loss value, and the model parameters may be updated based on backpropagation of the model parameter gradient.

Those skilled in the art may use a conventional model training method in the technical field of model training to update model parameters based on the model loss value described above, but the embodiments of the invention do not impose specific limitations on this. In addition, it should be noted that the training process described in the foregoing steps S201 to S205 is one iterative training process of the point cloud object detection model, and in order to ensure the detection accuracy of the point cloud object detection model, the training process may be repeatedly executed a plurality of times, that is, the point cloud object detection model may be iteratively trained a plurality of times until a preset detection accuracy requirement is satisfied, or the training is not stopped until the number of iterations of training reaches a preset number threshold.

Referring to FIG. 5, FIG. 5 exemplarily shows a result of obtaining a 3D bounding box using a CSA mode in the prior art. In FIG. 5, a bounding box 1 represents a real bounding box, and bounding boxes 2 and 3 represent bounding boxes predicted using a CSA mode, respectively. A length loss value of the bounding box 2 and the bounding box 1 is 0.5, and an angle loss value of the bounding box 3 and the bounding box 1 is also 0.5. Although the loss values of the bounding boxes 2 and 3 are both 0.5, accuracy of the bounding box 3 is much smaller than that of the bounding box 2, that is, the angle has a greater impact on the accuracy of the bounding box than the length in this example. In practical applications, the postures and types of objects are diverse, and the covering cases are also diverse. A degree of contribution of 3D center point coordinates (Center), a 3D size (Size), and an object angle (Angle) in the CSA mode to the accuracy of the bounding box is not fixed, and the degree of contribution of the center, the size, and the angle in each case cannot be accurately analyzed. In this way, when the regression loss function is used to train the point cloud object detection model, corresponding loss weights of the center, the size, and the angle cannot be accurately determined, which cannot ensure the accuracy of the bounding box, and also increase the difficulty of model training.

However, in the method described in the foregoing steps S201 to S205, since the degree of contribution of the predicted 2D coordinate value of each bounding box corner point to the accuracy of the bounding box is the same, even if a predicted 2D coordinate value of an individual bounding box corner point is inaccurate, the accuracy of the bounding box will not be reduced, so that the accuracy of the bounding box is effectively ensured. In addition, the loss weight $w_i$ corresponding to the predicted 2D coordinate value of each bounding box corner point may be set to the same value, and the training difficulty of model training may be significantly reduced, thereby improving the detection ability of the model and further ensuring the accuracy of the bounding box.

The foregoing step S204 is further described below.

According to the description of the above embodiments, it can be seen that the degree of contribution of the predicted 2D coordinate value of each bounding box corner point to the accuracy of the bounding box is the same. Therefore, the loss weight $w_i$ corresponding to the predicted 2D coordinate value of each bounding box corner point may be set to the same value. However, in practical applications, the object may be covered. In this case, the loss weight of each bounding box corner point may be adjusted according to whether each bounding box corner point is visible, so that more attention can be paid to the uncovered bounding box corner point during model training. Specifically, in some embodiments of the foregoing step S204, after the loss value between the predicted 2D coordinate value and the real 2D coordinate value in each coordinate group is obtained, the model loss value may be obtained by the following steps 11 to 13.

Step 11: Analyze visibility of each of the third bounding box corner points on the third XY plane.

Visibility analysis refers to analyzing whether the third bounding box corner point is visible or invisible on the third XY plane. If the third bounding box corner point is visible, it indicates that the current third bounding box corner point is not covered. Otherwise, it indicates that the current third bounding box corner point is covered.

It should be noted that, in the embodiments of the invention, a conventional end point visibility analysis method in the technical field of point clouds may be used to analyze whether the third bounding box corner points are visible on the third XY plane, where the third bounding box corner points are end points in the end point visibility analysis method. The embodiments of the invention do not specifically limit the end point visibility analysis method described above. For example, the end point visibility analysis method disclosed in the paper entitled "Labels Are Not Perfect: Improving Probabilistic Object Detection via Label Uncertainty" published in 2020 on the preprint system arXiv.org can be used.

Step 12: Adjust each loss weight of a loss value corresponding to the predicted 2D coordinate value of the third bounding box corner points based on an analysis result of the visibility.

Specifically, a loss weight of a loss value corresponding to a predicted 2D coordinate value of a visible third bounding box corner point may be adjusted, so that more attention may be paid to the predicted 2D coordinate value of the third bounding box corner point during model training; and a loss weight of a loss value corresponding to a predicted 2D coordinate value of an invisible third bounding box corner point may be adjusted, so that the attention to the predicted 2D coordinate value of the third bounding box corner points is reduced during model training.

In some implementations, if a third bounding box corner point is visible, a corresponding loss weight is increased; or if a third bounding box corner point is invisible, a corresponding loss weight is decreased. Those skilled in the art can flexibly set the increment and decrement of the loss weight according to needs, and the embodiments of the invention do not specifically limit this.

Step 13: Obtain a model loss value based on the loss value and an adjusted loss weight.

Specifically, weighted sum calculation may be performed on the loss value based on the adjusted loss weight, and a result of the weighted sum calculation may be used as the model loss value.

Based on the method described in the foregoing steps 11 to 13, the loss weight of the loss value corresponding to the predicted 2D coordinate value of the third bounding box corner points can be flexibly adjusted based on the visibility of the third bounding box corner points, so that more attention can be paid to the uncovered third bounding box corner points during model training, the training effect of the model can be further improved, the detection ability of the model can be improved, and the accuracy of the bounding box can be ensured.

The foregoing steps 11 and 12 are further described below.

In the foregoing step 11, the predicted 2D coordinate value of the third bounding box corner point includes two coordinates on the X axis and the Y axis, therefore, when the visibility of the third bounding box corner point on the third XY plane is analyzed, the visibility of the third bounding box corner point on the X axis and the Y axis of the third XY plane may be analyzed separately in order to further improve the accuracy of the visibility analysis.

In this case, when step 12 is performed, the loss weight of the loss value corresponding to the X-axis coordinate in the predicted 2D coordinate value may be adjusted based on the analysis result of the visibility of the third bounding box corner point on the X axis, and the loss weight of the loss value corresponding to the Y-axis coordinate in the predicted 2D coordinate value may be adjusted based on the analysis result of the visibility of the third bounding box corner points on the Y axis. Taking the calculation formula of the mode loss function shown in formula (1) as an example, a loss weight w1 of an X-axis coordinate x1 and a loss weight w2 of a Y-axis coordinate y1 in predicted 2D coordinate values of the first one of the third bounding box corner points can be adjusted, respectively. The adjustment methods of the first one to third one of the third bounding box corner points are similar, and will not be described in detail.

When step 13 is performed, weighted sum calculation may be performed on the loss values and loss weights of the X-axis coordinate and the Y-axis coordinate in the predicted 2D coordinate value of each of the third bounding box corner points to obtain a model loss value. Taking the smooth loss function as an example, the calculation formula of the model loss value in this case may be shown in formula (1).

The training method of the point cloud object detection model is further described below.

According to the embodiments of the method described above, each coordinate group is formed from the predicted 2D coordinate value and the real 2D coordinate value corresponding to the same arrangement rank based on the predicted arrangement sequence and the real arrangement sequence of the third bounding box corner points when training the point cloud object detection model, and the loss value between the predicted 2D coordinate value and the real 2D coordinate value in each coordinate group is obtained by using a regression loss function, and the model loss value is obtained based on the loss value. If a deviation between the predicted arrangement sequence and the real arrangement sequence is relatively large, a finally obtained model loss value is also relatively large, which may increase the training difficulty of the model. In this regard, in the embodiments of the invention, different methods may be used to adjust the predicted arrangement sequence for different types of objects, so as to obtain a more accurate model loss value, reduce the difficulty of model training, and improve the training effect of the model. In the embodiments of the invention, objects may be divided into two categories based on a degree of correlation between the predicted orientation of the object and the predicted arrangement sequence. One category indicates that the degree of correlation between the predicted orientation and the predicted arrangement sequence is high, and it is required to ensure the accuracy of the predicted orientation and the predicted arrangement sequence at the same time, for example, the object may be a vehicle. The other category indicates that the degree of correlation between the predicted orientation and the predicted arrangement sequence is low, and it is not required to ensure the accuracy of the predicted orientation and the predicted arrangement sequence at the same time, for example, such objects may be vulnerable road users (VRU) such as pedestrians, bicyclists, electric bicycle riders, and motorcycle riders. These two categories of objects are described below, respectively. It should be noted that those skilled in the art can flexibly set the magnitude requirements for the degree of correlation between the predicted orientation and the predicted arrangement sequence of different objects according to needs, as long as different objects can be distinguished, and the embodiments of the invention do not specifically limit the method for setting the degree of correlation.

I. Objects with a high degree of correlation between the predicted orientation and the predicted arrangement sequence

In this embodiment of the invention, after step S201 and step S202 are performed, and before step S203 is performed, the predicted arrangement sequence may be adjusted by the following steps 21 to 24.

Step 21: Perform object orientation prediction on the sample of the 3D point cloud frame to obtain a predicted orientation of the object, where a third bounding box corner point in the first arrangement rank in the predicted arrangement sequence is located at the upper left of the predicted orientation, and the third bounding box corner points are sequentially arranged in a preset sequence.

In the embodiments of the invention, a conventional object orientation prediction method in the technical field of point clouds may be used to predict the object orientation on the sample of the 3D point cloud frame, and the embodiments of the invention do not specifically limit the object orientation prediction method described above. In addition, those skilled in the art can flexibly set specific rules of the preset sequence according to needs, as long as it is ensured that the predicted arrangement sequence is the same as the preset sequence used by the real arrangement sequence.

For example, as shown in FIG. 4, after the third bounding box corner point located at the upper left of the object orientation is used as the corner point in the first arrangement rank and is numbered 0, the preset sequence is set to be clockwise, and then the third bounding box corner points located at the upper right, the lower right, and the lower left of the object orientation are sequentially arranged in a clockwise direction and are numbered 1, 2, and 3 respectively.

Step 22: Determine whether the predicted orientation of the object is opposite to a preset real orientation, where a third bounding box corner point in the first arrangement rank in the real arrangement sequence is located at the upper left of the real orientation, and the third bounding box corner points are also sequentially arranged in the preset sequence.

If the predicted orientation of the object is opposite to the preset real orientation, step 23 is performed. If the predicted orientation of the object is not opposite to the preset real orientation, step 24 is performed.

Step 23: If the predicted orientation of the object is opposite to the preset real orientation, adjust the predicted arrangement sequence of the third bounding box corner points so that the predicted orientation of the object is the same as the real orientation and the third bounding box corner point in the first arrangement rank in the predicted arrangement sequence is always located at the upper left of the predicted orientation.

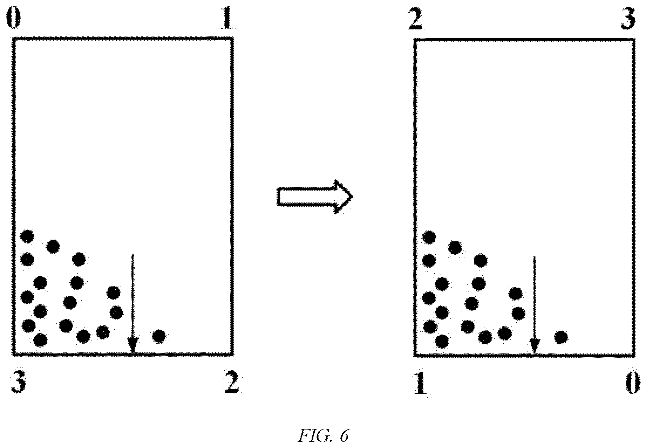

As shown in FIG. 6, the direction indicated by an arrow in FIG. 6 is the real orientation of the object, and according to the order from left to right, the predicted orientation of the first bounding box in FIG. 6 is opposite to the real orientation, and in this case, it is required to reverse the orientation. At the same time, it is assumed that third bounding box corner points located at the upper left, upper right, lower right, and lower left in the first bounding box are A, B, C, and D, respectively. Before the reverse, the predicted arrangement sequence is ABCD, where a third bounding box corner point A in the first arrangement rank is numbered 0 and is located at the upper left of the predicted orientation. After the reverse, the predicted orientation is the same as the real orientation, and the predicted arrangement sequence is CDAB, where a third bounding box corner point C in the first arrangement rank is still numbered 0 and still located at the upper left of the predicted orientation.

In some preferred implementations, the predicted arrangement sequence of the third bounding box corner points may be adjusted by the following steps 231 and 232.

Step 231: Calculate an included angle between the predicted orientation and a side formed by connecting every two adjacent third bounding box corner points. Step 232: Take a side corresponding to the smallest included angle as a long side of a 2D bounding box and adjust an arrangement rank of each of the third bounding box corner points until the predicted orientation of the object is the same as the preset real orientation.

Still referring to the example shown in FIG. 6, in FIG. 6, the predicted orientation of the first bounding box in FIG. 6 is opposite to the real orientation according to the order from left to right. Two third bounding box corner points numbered 1 and 2 are adjacent to each other, and the side formed by them can be represented as a 12-side, and similarly, the sides formed by other adjacent third bounding box corner points can be represented as a 23-side, a 30-side, and a 01-side, respectively. The included angles between the 12-side, the 23-side, the 30-side, and the 01-side and the real orientation are 0°, 90°, 180°, and 270° respectively. Since the included angle of the 12-side is the smallest, the 12-side is used as the long side, and the arrangement sequence of each of the third bounding box corner points is adjusted in a clockwise direction, and each of the third bounding box corner points is re-numbered.

Step 24: Skip adjusting the predicted arrangement sequence of the third bounding box corner points.

After the foregoing steps are performed, steps S203 to S205 are performed. If the predicted arrangement sequence of the third bounding box corner points is adjusted, step S203 is performed based on the adjusted predicted arrangement sequence. If the predicted arrangement sequence of the third bounding box corner points is not adjusted, step S203 is performed based on the unadjusted predicted arrangement sequence.

The accuracy of the predicted orientation of the object and the predicted arrangement sequence can be simultaneously improved, and the accuracy of the bounding box can be effectively ensured by adjusting the predicted arrangement sequence based on the method described in the foregoing steps 21 to 24.

II. Objects with a low degree of correlation between the predicted orientation and the predicted arrangement sequence

In this embodiment of the invention, adjustments are made to steps S202 to S205 other than step S201, and the adjusted steps S202 to S205 are described below, respectively.

In step S202, a predicted arrangement sequence of third bounding box corner points when the object is in each different orientation is obtained, each group of predicted arrangement sequence is in a one-to-one correspondence with each orientation, and the third bounding box corner point in the first arrangement rank in each group of predicted arrangement sequence is located at the upper left of the corresponding orientation.

One 2D bounding box includes four sides, and thus has four predicted orientations, and in this embodiment, one group of predicted arrangement sequence is obtained for each predicted orientation.

In step S203, for each group of predicted arrangement sequence, each coordinate group is formed from a predicted 2D coordinate value and a real 2D coordinate value corresponding to a same arrangement rank based on a current group of predicted arrangement sequence and the real arrangement sequence.

In step S204, for each group of predicted arrangement sequence, a regression loss function is used to obtain a loss value between a predicted 2D coordinate value and a real 2D coordinate value in each coordinate group corresponding to a current group of predicted arrangement sequence, and the model loss value is obtained based on the loss value.

In step S205, the smallest model loss value is selected from the model loss value corresponding to each group of predicted arrangement sequence, and model parameters are updated based on the smallest model loss value.

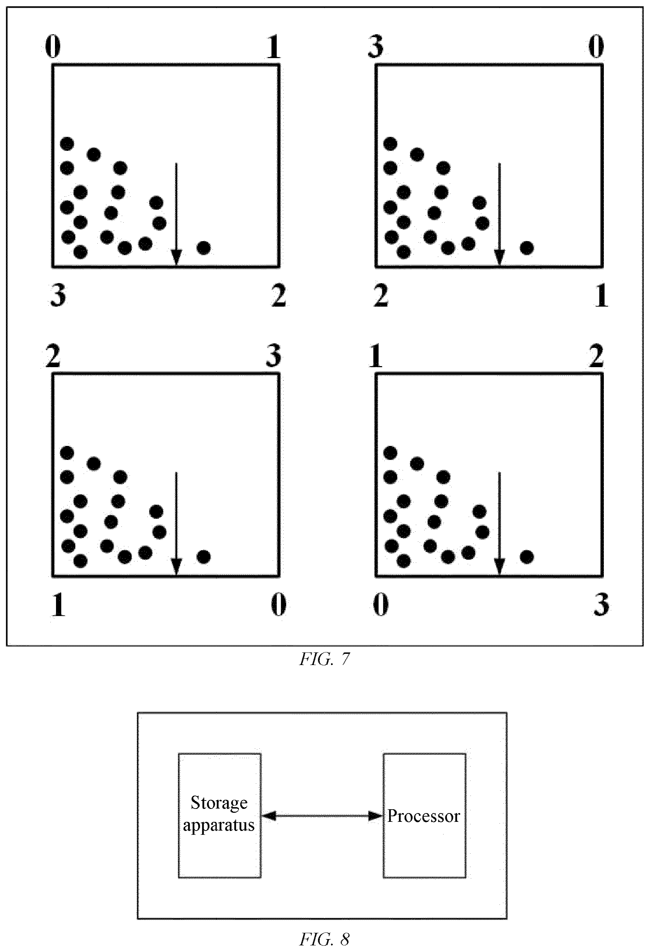

Referring to FIG. 7, arrows indicate the real orientation of the object. Assuming that the third bounding box corner points located at the upper left, upper right, lower right, and lower left of the bounding box are A, B, C, and D, respectively, there are four predicted orientations of the bounding box. Four groups of predicted arrangement sequences can be obtained based on the four predicted orientations, and the four groups of predicted arrangement sequences are ABCD, BCDA, CDAB, and DABC, respectively. In the predicted arrangement sequence of ABCD, the numbers of ABCD are 0, 1, 2, and 3, respectively, and in the predicted arrangement sequence of BCDA, the numbers of BCDA are 0, 1, 2, and 3, respectively. The numbers of CDAB and DABC are similar and are not described in detail. It can be seen that the third bounding box corner point numbered 0 is always located at the upper left of the predicted orientation. A model loss value may be obtained based on each group of predicted arrangement sequence, and the smallest one from these model loss values is selected as the final model loss value, and the final model loss value is used to update the model parameters.

The related methods involved in the foregoing steps S203 and S204 are the same as the methods mentioned in the method embodiments described above, and will not be repeated here. For example, the method of forming each coordinate group from a predicted 2D coordinate value and a real 2D coordinate value corresponding to a same arrangement rank based on the predicted arrangement sequence and the real arrangement sequence is the same as the method mentioned in the method embodiments described above.

By adjusting the predicted arrangement sequence by the foregoing method, the accuracy of the predicted arrangement sequence can be improved, and the accuracy of the bounding box can be effectively ensured.

It should be noted that, although the steps are described in a specific order in the above embodiments, those skilled in the art may understand that in order to implement the effects of the invention, different steps are not necessarily performed in such an order, but may be performed simultaneously (in parallel) or in other orders. These adjusted solutions and the technical solutions described in the invention are equivalent technical solutions and shall all fall within the scope of protection of the invention.

Those skilled in the art may understand that all or some of the procedures in the methods in the above embodiments of the invention may be implemented by using a computer program instructing related hardware. The computer program may be stored in a computer-readable storage medium. When the computer program is executed by a processor, the steps in the above method embodiments may be implemented. The computer program includes computer program code, and the computer program code may be in a source code form, an object code form, a form of an executable file, some intermediate forms, or the like. The computer-readable storage medium may include: any entity or apparatus that can carry the computer program code, a medium, a USB flash drive, a removable hard disk, a magnetic disk, an optical disc, a computer memory, a read-only memory, a random access memory, an electric carrier signal, a telecommunications signal, a software distribution medium, and the like. It should be noted that the content included in the computer-readable storage medium may be appropriately added or deleted depending on requirements of the legislation and patent practice in a jurisdiction. For example, in some jurisdictions, according to the legislation and patent practice, the computer-readable storage medium does not include an electric carrier signal and a telecommunications signal.

Further, the invention further provides a computer device.

Referring to FIG. 8, FIG. 8 is a schematic diagram of a main structure of an embodiment of a computer device according to the invention. As shown in FIG. 8, the computer device in this embodiment of the invention mainly includes a storage apparatus and a processor. The storage apparatus may be configured to store a program for performing the point cloud object detection method in the above method embodiments, and the processor may be configured to execute a program in the storage apparatus. The program includes, but is not limited, to the program for performing the point cloud object detection method in the above method embodiments. For ease of description, only parts related to the embodiments of the invention are shown. For specific technical details that are not disclosed, refer to the method part of the embodiments of the invention.

The computer device in this embodiment of the invention may be a control device formed by various electronic devices. In some possible implementations, the computer device may include a plurality of storage apparatuses and a plurality of processors. The program for performing the point cloud object detection method in the above method embodiment may be divided into a plurality of segments of subprograms, and the subprograms may be separately loaded and run by the processor to perform different steps of the point cloud object detection method in the above method embodiment. Specifically, the subprograms may be separately stored in different storage apparatuses. Each processor may be configured to execute the program in one or more storage apparatuses, to jointly implement the point cloud object detection method in the above method embodiment. That is, each processor separately performs different steps of the point cloud object detection method in the above method embodiment, to jointly implement the point cloud object detection method in the above method embodiment.

The plurality of processors may be processors deployed on a same device. For example, the computer device may be a high-performance device including a plurality of processors, and the plurality of processors may be processors configured on the high-performance device. In addition, the plurality of processors may alternatively be processors deployed on different devices. For example, the above computer device may be a server cluster, and the plurality of processors may be processors on different servers in the server cluster.

The invention further provides a computer-readable storage medium.

In the computer-readable storage medium embodiment according to the invention, the computer-readable storage medium may be configured to store a program for performing the point cloud object detection method in the above method embodiment, and the program may be loaded and run by a processor to implement the above point cloud object detection method. For ease of description, only parts related to the embodiments of the invention are shown. For specific technical details that are not disclosed, refer to the method part of the embodiments of the invention. The computer-readable storage medium may be a storage apparatus device formed by various electronic devices. Optionally, the computer-readable storage medium in this embodiment of the invention is a non-transitory computer-readable storage medium.

Further, the invention further provides a vehicle.

In an embodiment of the vehicle according to the invention, the vehicle may include the computer device described in the above embodiment of the computer device. In this embodiment, the vehicle may be a self-driving vehicle, an unmanned vehicle, or the like. In addition, according to types of power sources, the vehicle in this embodiment can be a fuel vehicle, an electric vehicle, a hybrid vehicle in which electric energy is mixed with fuel, or a vehicle using other new energy sources.

Heretofore, the technical solutions of the invention have been described in combination with the implementations shown in accompanying drawings. However, those skilled in the art can readily understand that the scope of protection of the invention is apparently not limited to these particular implementations. Those skilled in the art can make equivalent changes or substitutions to the related technical features without departing from the principle of the invention, and all the technical solutions with such changes or substitutions shall fall within the scope of protection of the invention.

**Claims**

1.  A point cloud object detection method, wherein the method comprises:

    obtaining a three-dimensional(3D) point cloud frame collected by a radar;
    performing object detection on the 3D point cloud frame to obtain a 3D object bounding box represented by 3D coordinates of bounding box corner points; and
    obtaining an object detection result based on the 3D object bounding box.

2.  The point cloud object detection method according to claim 1, wherein the step of "obtaining a 3D object bounding box represented by 3D coordinates of bounding box corner points" comprises:

    detecting a minimum value and a maximum value, on a Z axis, of an object in the 3D point cloud frame, and separately obtaining a first XY plane and a second XY plane intersecting with the Z axis at the minimum value and the maximum value;
    detecting two-dimensional(2D) coordinates of first bounding box corner points of a2D bounding box corresponding to the object on the first XY plane, and obtaining 3D coordinates of the first bounding box corner points based on the2D coordinates and the minimum value;
    detecting 2D coordinates of second bounding box corner points of a 2D bounding box corresponding to the object on the second XY plane, and obtaining 3D coordinates of the second bounding box corner points based on the 2D coordinates and the maximum value; and
    obtaining the 3D object bounding box based on the 3D coordinates of the first bounding box corner points and the second bounding box corner points.

3.  The point cloud object detection method according to claim 2, wherein the method further comprises: using a preset point cloud object detection model to separately detect the 2D coordinates of the first bounding box corner points and the second bounding box corner points,
    wherein the preset point cloud object detection model is obtained through training by:

    using a point cloud object detection model to detect a specific value, on the Z axis, of the object in a sample of the 3D point cloud frame, and obtaining a third XY plane intersecting with the Z axis at the specific value, the specific value being a minimum value or a maximum value of the object on the Z axis;
    obtaining predicted 2D coordinate values and a predicted arrangement sequence of third bounding box corner points of a 2Dbounding box corresponding to the object on the third XY plane, and obtaining real 2D coordinate values and a real arrangement sequence of the third bounding box corner points based on the sample;
    forming each coordinate group from a predicted 2D coordinate value and a real 2D coordinate value corresponding to a same arrangement rank based on the predicted arrangement sequence and the real arrangement sequence of the third bounding box corner points;
    using a regression loss function to obtain a loss value between a predicted 2D coordinate value and a real 2D coordinate value in each coordinate group, and obtaining a model loss value based on the loss value; and
    updating model parameters of the point cloud object detection model based on the model loss value.

4.  The point cloud object detection method according to claim 3, wherein before the step of "obtaining a model loss value based on the loss value", the method further comprises:

    analyzing visibility of each of the third bounding box corner points on the third XY plane;
    adjusting a loss weight of a loss value corresponding to the predicted 2D coordinate value of the third bounding box corner point based on an analysis result of the visibility; and

obtaining a model loss value based on the loss value and an adjusted loss weight.

5. The point cloud object detection method according to claim 4, wherein the step of "adjusting a loss weight of a loss value corresponding to the predicted 2D coordinate value of the third bounding box corner points based on an analysis result of the visibility" comprises:

determining whether the third bounding box corner points are visible based on the analysis result of the visibility; and
if the third bounding box corner points are visible, increasing the corresponding loss weight; or
if the third bounding box corner points are invisible, decreasing the corresponding loss weight.

6. The point cloud object detection method according to claim 4, wherein

the step of "analyzing visibility of each of the third bounding box corner points on the third XY plane" comprises:
separately analyzing visibility of the third bounding box corner points on an X-axis and a Y-axis of the third XY plane; and
the step of "adjusting a loss weight of a loss value corresponding to the predicted 2D coordinate value of the third bounding box corner points based on an analysis result of the visibility" comprises:

adjusting a loss weight of a loss value corresponding to an X-axis coordinate in the predicted 2D coordinate value based on an analysis result of the visibility of the third bounding box corner points on the X-axis; and
adjusting a loss weight of a loss value corresponding to a Y-axis coordinate in the predicted 2D coordinate value based on an analysis result of the visibility of the third bounding box corner points on the Y axis.

7. The point cloud object detection method according to claim 3, wherein before the step of "forming each coordinate group from a predicted 2D coordinate value and a real 2D coordinate value corresponding to a same arrangement rank based on the predicted arrangement sequence and the real arrangement sequence of the third bounding box corner points", the method further comprises:

performing object orientation prediction on the sample to obtain a predicted orientation of the object, wherein a third bounding box corner point in the first arrangement rank in the predicted arrangement sequence is located at the upper left of the predicted orientation, and the third bounding box corner points are sequentially arranged in a preset sequence;
determining whether the predicted orientation of the object is opposite to a preset real orientation, wherein a third bounding box corner point in the first arrangement rank in the real arrangement sequence is located at the upper left of the real orientation, and the third bounding box corner points are also sequentially arranged in the preset sequence; and
if the predicted orientation of the object is opposite to the preset real orientation, adjusting the predicted arrangement sequence of the third bounding box corner points so that the predicted orientation of the object is the same as the real orientation and the third bounding box corner point in the first arrangement rank in the predicted arrangement sequence is always located at the upper left of the predicted orientation; or
if the predicted orientation of the object is not opposite to the preset real orientation, skipping adjusting the predicted arrangement sequence of the third bounding box corner points.

8. The point cloud object detection method according to claim 7, wherein the step of "adjusting the predicted arrangement sequence of the third bounding box corner points" comprises:

calculating an included angle between the predicted orientation and a side formed by connecting every two adjacent third bounding box corner points; and
taking a side corresponding to the smallest included angle as a long side of a 2D bounding box and adjusting an arrangement rank of each of the third bounding box corner points based on the preset sequence until the predicted orientation of the object is the same as the preset real orientation.

9. The point cloud object detection method according to claim 3, wherein

the step of "obtaining a predicted arrangement sequence of third bounding box corner points" comprises:
obtaining a predicted arrangement sequence of third bounding box corner points when the object is in each different orientation, wherein each group of predicted arrangement sequence is in a one-to-one correspondence with each orientation;

the step of "forming each coordinate group from a predicted 2D coordinate value and a real 2D coordinate value corresponding to a same arrangement rank based on the predicted arrangement sequence and the real arrangement sequence of the third bounding box corner points" comprises: for each group of predicted arrangement sequence, forming each coordinate group from a predicted 2D coordinate value and a real 2D coordinate value corresponding to a same arrangement rank based on a current group of predicted arrangement sequence and the real arrangement sequence;

the step of "obtaining a model loss value" comprises: for each group of predicted arrangement sequence, using a regression loss function to obtain a loss value between a predicted 2D coordinate value and a real 2D coordinate value in each coordinate group corresponding to a current group of predicted arrangement sequence, and obtaining the model loss value based on the loss value; and

the step of "updating model parameters of the point cloud object detection model based on the model loss value" comprises: selecting the smallest model loss value from the model loss value corresponding to each group of predicted arrangement sequence, and updating model parameters based on the smallest model loss value.

10. A computer device, comprising at least one processor and a storage apparatus configured to store a plurality of program codes, wherein the program codes are adapted to be loaded and executed by the at least one processor to perform the point cloud object detection method according to any one of claims 1 to 9.

11. A non-transitory computer-readable storage medium storing a plurality of program codes, wherein the program codes are adapted to be loaded and executed by at least one processor to perform the point cloud object detection method according to any one of claims 1 to 9.

12. A vehicle, comprising the computer device according to claim 10.

Start

Obtain a 3D point cloud frame collected by a radar — S101

Perform object detection on the 3D point cloud frame to obtain a 3D object bounding box represented by 3D coordinates of bounding box corner points — S102

Obtain an object detection result based on the 3D object bounding box — S103

End

*FIG. 1*

Start

Detect a minimum value and a maximum value, on a Z axis, of an object in a 3D point cloud frame, and separately obtain a first XY plane and a second XY plane intersecting with the Z axis at the minimum value and the maximum value — S1021

Detect 2D coordinates of first bounding box corner points of a 2D bounding box corresponding to the object on the first XY plane, and obtain 3D coordinates of the first bounding box corner points based on the 2D coordinates and the minimum value — S1022

Detect 2D coordinates of second bounding box corner points of a 2D bounding box corresponding to the object on the second XY plane, and obtain 3D coordinates of the second bounding box corner points based on the 2D coordinates and the maximum value — S1023

Obtain a 3D object bounding box based on the 3D coordinates of the first bounding box corner points and the second bounding box corner points — S1024

End

*FIG. 2*

```
                           ┌─────────┐
                           │  Start  │
                           └─────────┘
                                │
                                ▼
┌──────────────────────────────────────────────────────────┐
│ Use a point cloud object detection model to detect a       │
│ specific value, on a Z axis, of an object in a sample of a │      S201
│ 3D point cloud frame, and obtain a third XY plane          │
│ intersecting with the Z axis at the specific value, the    │
│ specific value being a minimum value or a maximum          │
│ value of the object on the Z axis                          │
└──────────────────────────────────────────────────────────┘
                                │
                                ▼
┌──────────────────────────────────────────────────────────┐
│ Obtain predicted 2D coordinate values and a predicted      │
│ arrangement sequence of third bounding box corner points   │      S202
│ of a 2D bounding box corresponding to the object on the    │
│ third XY plane, and obtain real 2D coordinate values and   │
│ a real arrangement sequence of the third bounding box      │
│ corner points based on the sample                          │
└──────────────────────────────────────────────────────────┘
                                │
                                ▼
┌──────────────────────────────────────────────────────────┐
│ Form each coordinate group from a predicted 2D coordinate  │
│ value and a real 2D coordinate value corresponding to a    │      S203
│ same arrangement rank based on the predicted arrangement   │
│ sequence and the real arrangement sequence of the third    │
│ bounding box corner points                                 │
└──────────────────────────────────────────────────────────┘
                                │
                                ▼
┌──────────────────────────────────────────────────────────┐
│ Use a regression loss function to obtain a loss value      │      S204
│ between a predicted 2D coordinate value and a real 2D      │
│ coordinate value in each coordinate group, and obtain a    │
│ model loss value based on the loss value                   │
└──────────────────────────────────────────────────────────┘
                                │
                                ▼
┌──────────────────────────────────────────────────────────┐
│ Update model parameters of the point cloud object          │      S205
│ detection model based on the model loss value              │
└──────────────────────────────────────────────────────────┘
                                │
                                ▼
                           ┌─────────┐
                           │   End   │
                           └─────────┘
```

*FIG. 3*

**0**             **1**

Upper

Left    Right

**3**            **2**

Lower

*FIG. 4*

Bounding box 1

Bounding box 3

Bounding box 2

*FIG. 5*

*FIG. 6*

FIG. 7

FIG. 8

## INTERNATIONAL SEARCH REPORT

| International application No. |
|---|
| **PCT/CN2023/138983** |

| A. | CLASSIFICATION OF SUBJECT MATTER |
|---|---|

G06V20/56(2022.01)i; G01S7/48(2006.01)i; G01S13/66(2006.01)i; G06V10/776(2022.01)i

According to International Patent Classification (IPC) or to both national classification and IPC

| B. | FIELDS SEARCHED |
|---|---|

Minimum documentation searched (classification system followed by classification symbols)

IPC: G06V,G01S,G06T,G06K

Documentation searched other than minimum documentation to the extent that such documents are included in the fields searched

Electronic data base consulted during the international search (name of data base and, where practicable, search terms used)

CNTXT, DWPI, WPABS, ENTXT, CJFD, CNKI, IEEE: 点云, 帧, 三维, 立体, 3D, 目标, 检测, 框, Z轴, 平面, 坐标, 角点, 车辆, 遮挡, point cloud, frame, three-dimensional, stereo, 3D, target detect+, box, Z-axis, plane, coordinate, angular point, vehicle, shield+

| C. | DOCUMENTS CONSIDERED TO BE RELEVANT |
|---|---|

| Category* | Citation of document, with indication, where appropriate, of the relevant passages | Relevant to claim No. |
|---|---|---|
| PX | CN 115965925 A (ANHUI WEILAI ZHIJIA TECHNOLOGY CO., LTD.) 14 April 2023 (2023-04-14)<br>claims 1-12 | 1-12 |
| X | CN 113111692 A (BEIJING HORIZON ROBOTICS TECHNOLOGY RESEARCH AND DEVELOPMENT CO., LTD.) 13 July 2021 (2021-07-13)<br>description, paragraphs 0006, 0007, and 0035-0052, and figures 1-7 | 1, 10-12 |
| X | CN 114966603 A (BEIJING INSTITUTE OF TECHNOLOGY) 30 August 2022 (2022-08-30)<br>description, paragraphs 0055-0076, and figures 1-3 | 1, 10-12 |
| A | CN 115359241 A (REALSEE (BEIJING) TECHNOLOGY CO., LTD.) 18 November 2022 (2022-11-18)<br>entire document | 1-12 |
| A | CN 115457492 A (SUZHOU WANJI VEHICLE NETWORK TECHNOLOGY CO., LTD.) 09 December 2022 (2022-12-09)<br>entire document | 1-12 |

| ✓ Further documents are listed in the continuation of Box C. | ✓ See patent family annex. |
|---|---|

| * | Special categories of cited documents: |
|---|---|
| "A" | document defining the general state of the art which is not considered to be of particular relevance |
| "D" | document cited by the applicant in the international application |
| "E" | earlier application or patent but published on or after the international filing date |
| "L" | document which may throw doubts on priority claim(s) or which is cited to establish the publication date of another citation or other special reason (as specified) |
| "O" | document referring to an oral disclosure, use, exhibition or other means |
| "P" | document published prior to the international filing date but later than the priority date claimed |

| | |
|---|---|
| "T" | later document published after the international filing date or priority date and not in conflict with the application but cited to understand the principle or theory underlying the invention |
| "X" | document of particular relevance; the claimed invention cannot be considered novel or cannot be considered to involve an inventive step when the document is taken alone |
| "Y" | document of particular relevance; the claimed invention cannot be considered to involve an inventive step when the document is combined with one or more other such documents, such combination being obvious to a person skilled in the art |
| "&" | document member of the same patent family |

| Date of the actual completion of the international search | Date of mailing of the international search report |
|---|---|
| **05 February 2024** | **18 February 2024** |

| Name and mailing address of the ISA/CN | Authorized officer |
|---|---|
| **China National Intellectual Property Administration (ISA/CN)**<br>**China No. 6, Xitucheng Road, Jimenqiao, Haidian District, Beijing 100088** | |
| | Telephone No. |

Form PCT/ISA/210 (second sheet) (July 2022)

**INTERNATIONAL SEARCH REPORT**

International application No.

**PCT/CN2023/138983**

| C. | DOCUMENTS CONSIDERED TO BE RELEVANT | |
|---|---|---|
| Category* | Citation of document, with indication, where appropriate, of the relevant passages | Relevant to claim No. |
| A | US 2021012089 A1 (WAYMO LLC.) 14 January 2021 (2021-01-14)<br>entire document | 1-12 |

Form PCT/ISA/210 (second sheet) (July 2022)

## INTERNATIONAL SEARCH REPORT
### Information on patent family members

| International application No. |
| --- |
| **PCT/CN2023/138983** |

| Patent document cited in search report | | | Publication date (day/month/year) | Patent family member(s) | | | Publication date (day/month/year) |
| --- | --- | --- | --- | --- | --- | --- | --- |
| CN | 115965925 | A | 14 April 2023 | None | | | |
| CN | 113111692 | A | 13 July 2021 | None | | | |
| CN | 114966603 | A | 30 August 2022 | None | | | |
| CN | 115359241 | A | 18 November 2022 | None | | | |
| CN | 115457492 | A | 09 December 2022 | None | | | |
| US | 2021012089 | A1 | 14 January 2021 | WO | 2021007320 | A1 | 14 January 2021 |
| | | | | EP | 3980932 | A1 | 13 April 2022 |
| | | | | KR | 20220031685 | A | 11 March 2022 |
| | | | | JP | 2022539843 | A | 13 September 2022 |
| | | | | CN | 114080629 | A | 22 February 2022 |

Form PCT/ISA/210 (patent family annex) (July 2022)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- CN 202310194602